# EUROPEAN PATENT SPECIFICATION

(11) **EP 1 725 027 B1**
(45) Date of publication and mention of the grant of the patent: **14.01.2009**
(21) Application number: 06113330.2
(22) Date of filing: 28.04.2006
(51) Int. Cl.: H04N 5/50

(54) **Television tuner manufacturing method and television tuner**
Fernsehtunerherstellungsverfahren und Fernsehtuner
Procece de production d'un tuner et son tuner

(30) Priority: 20.05.2005 JP 2005148271
(43) Date of publication of application: 22.11.2006
(73) Proprietor: ALPS ELECTRIC CO., LTD., Ota-ku Tokyo 145 (JP)
(72) Inventor: Obara, Katsutoshi, Ota-ku Tokyo 145 (JP)
(74) Representative: Kensett, John Hinton

(56) References cited:
- EP-A- 0 646 802
- EP-A- 1 092 983
- WO-A-01/97512
- JP-A- 11 231 974
- RAYMOND D W ET AL: "NON-VOLATILE PROGRAMMABLE DEVICE AND IN-CIRCUIT TEST" PROCEEDINGS OF THE INTERNATIONAL TEST CONFERENCE. WASHINGTON, OCT. 2 - 6, 1994, NEW YORK, IEEE, US, 2 October 1994 (1994-10-02), pages 817-823, XP000520044 ISBN: 0-7803-2103-0

## Description

### BACKGROUND OF THE INVENTION

### 1. Field of the Invention

The present invention relates to a television tuner manufacturing method and a television tuner, and more particularly to a television tuner manufacturing method and a television tuner enabling easy management of television tuners before shipment thereof in a manufacturing process.

### 2. Description of the Related Art

In recent years, television tuners have been reduced in size so as to be installed in small-size electronic devices, such as a PC, a PDA, and a mobile phone. Further, to adapt to characteristics of these electronic devices, different models of television tuners of different required functions have been manufactured. In general, a television tuner includes a channel selection circuit, a demodulator circuit, a nonvolatile memory, and a CPU. The nonvolatile memory stores hardware driver software, application interface software, channel control software, display menu control software, remote control design software, and the like. The above software is executed by the CPU under an OS which is similarly stored in the nonvolatile memory.

Manufacturing of the above-described television tuner needs to include such processes as the above-described storing of necessary software in the nonvolatile memory, mounting of components, and implementation of a test. Further, during execution of these processes, the television tuners need to be managed in accordance with the model such that the television tuners of different models can be distinguished from one another.

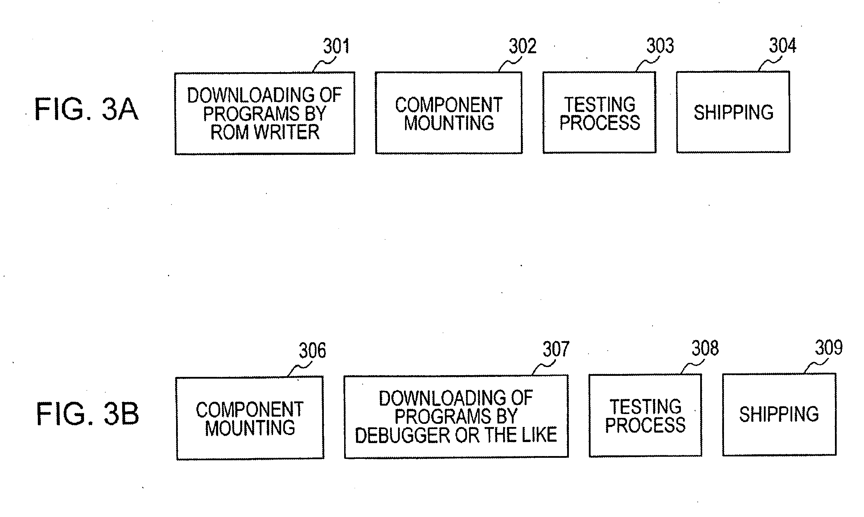

Figs. 3A and 3B are diagrams illustrating examples of methods of manufacturing a television tuner according to conventional arts. With reference to Figs. 3A and 3B, the methods of manufacturing a television tuner according to the conventional arts will now be described. The television tuner manufactured by the methods includes a channel selection circuit, a demodulator circuit, a nonvolatile memory, and a CPU, which are respectively functional components.

In the example illustrated in Fig. 3A, programs forming necessary software are downloaded to the nonvolatile memory before the functional components are mounted on a circuit board. In this example, all of the programs forming the necessary software are first downloaded to the nonvolatile memory by using a ROM writer or the like, before the nonvolatile memory is mounted on the circuit board. The programs downloaded in this case are common programs independent of the television tuner model, i.e., an OS and tuner control software including hardware driver software, application interface software, and channel control software, and programs dependent on the television tuner model, i.e., television control software including display menu control software and remote control design software (Step S301).

Thereafter, all of the functional components are mounted on the circuit board. Subsequent to the mounting process, the circuit boards mounted with the respective functional components are sorted out and managed in accordance with the television tuner model. Then, the operation flow advances to the next step (Step S302).

Subsequent to the process of Step S302, the circuit boards mounted with the respective functional components, which have been sorted out in accordance with the television tuner model, are tested in accordance with the model (Step S303), and then are shipped (Step S304).

In the example illustrated in Fig. 3B, the programs forming the necessary software are downloaded to the nonvolatile memory after the functional components have been mounted on the circuit board. In this example, the mounting of all of the functional components on the circuit board is first performed (Step S306).

After the functional components have been mounted on the circuit board, all of the programs forming the necessary software are downloaded to the nonvolatile memory by using a debugger or the like. The programs downloaded in this case are the same as the programs described above in Step S301. Subsequent to the downloading of the programs, the circuit boards mounted with the respective functional components are sorted out and managed in accordance with the television tuner model. Then, the operation flow advances to the next step (Step S307).

Subsequent to the process of Step S307, the circuit boards mounted with the respective functional components, which have been sorted out in accordance with the television tuner model, are tested in accordance with the model (Step S308), and then are shipped (Step S309).

A known conventional art relating to a television receiver including a television tuner is described in Japanese Unexamined Patent Application Publication No. 5-111033, for example.

In the methods of manufacturing a television tuner according to the above-described conventional arts, the tuner control software, i.e., the common programs independent of the television tuner model, and the television control software, i.e., the programs dependent on the television tuner model, are downloaded in a batch. Thus, in all of the processes following the downloading of the programs, the television tuners need to be managed in accordance with the model (in general, models are different among clients who use the television tuners). Therefore, the conventional methods have a disadvantage of complicating the management of the television tuners, such as inventory management thereof.

As a result, according to the conventional methods described above, if an error occurs in the above-described management, and if in-process products for a client exist, a product having the nonvolatile memory in which the programs for another client have been downloaded may be erroneously mixed among the in-process products. Further, if an order cancellation is received during the in-process, the whole process of downloading the programs to the nonvolatile memory needs to be redone for the cancelled products.

### SUMMARY OF THE INVENTION

An object of the present invention is to provide a television tuner manufacturing method and a television tuner which overcome the above-described disadvantage of the conventional arts and enable easy management of television tuners before shipment thereof in a manufacturing process as set out in claims 1 and 3.

According to one aspect of the present invention, in a method of manufacturing a television tuner including a channel selection circuit, a demodulator circuit, a nonvolatile memory, and a CPU, the above object is achieved by sequentially performing the steps of performing mounting of components including the channel selection circuit, the demodulator circuit, the nonvolatile memory, and the CPU; downloading tuner control software and an OS, which form common programs executable by the CPU and independent of a television tuner model, to the nonvolatile memory; performing a test; and downloading television control software, which forms programs executable by the CPU and dependent on the television tuner model, to the nonvolatile memory.

Further, the above object may be achieved by the method of manufacturing a television tuner, in which the tuner control software includes hardware driver software, application interface software, and channel control software, and in which the television control software includes display menu control software and remote control design software.

Further, according to another aspect of the present invention, the above object is achieved by a television tuner which includes a channel selection circuit, a demodulator circuit, a nonvolatile memory, and a CPU, and which is manufactured by the above-described method of manufacturing a television tuner.

Further, the above object may be achieved by the television tuner in which components including the channel selection circuit, the demodulator circuit, the nonvolatile memory, and the CPU are mounted on a circuit board and accommodated in a housing.

According to the above aspects of the present invention, in manufacturing television tuners, the television tuners can be easily managed in accordance with the model, and such situations as mixing of different models can be prevented in the management of the television tuners, such as inventory management thereof.

### BRIEF DESCRIPTION OF THE DRAWINGS

Fig. 1 is a diagram illustrating a method of manufacturing a television tuner according to an embodiment of the present invention.
Fig. 2 is a perspective view illustrating a configuration of a television tuner according to an embodiment of the present invention.
Figs. 3A and 3B are diagrams illustrating examples of methods of manufacturing a television tuner according to conventional arts.

### DESCRIPTION OF THE PREFERRED EMBODIMENTS

With reference to the drawings, embodiments of a television tuner manufacturing method and a television tuner according to the present invention will now be described in details.

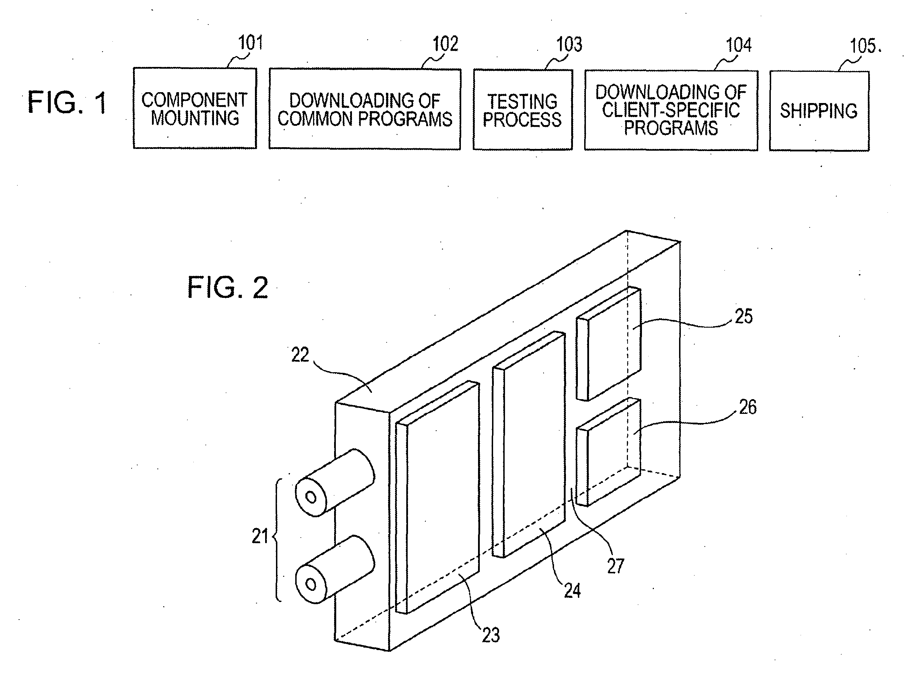

In Fig. 2, reference numerals 21, 22, 23, 24, 25, 26, and 27 indicate antenna connecting terminals, a housing, a channel selection circuit, a demodulator circuit, a nonvolatile memory, a CPU, and a circuit board, respectively.

As illustrated in Fig. 2, in a television tuner according to an embodiment of the present invention, the channel selection circuit 23, the demodulator circuit 24, the nonvolatile memory 25, and the CPU 26 are respectively formed as functional components. These functional components are mounted on the circuit board 27, and the circuit board 27 mounted with the functional components is accommodated in the housing 22 which is formed by a metal plate or the like. The housing 22 is provided with the antenna connecting terminals 21 which are used for connecting antennas (not illustrated) and with power supply terminals (not illustrated) which supply electric power to the functional components.

A method of manufacturing a television tuner of the above-described structure will now be described with reference to the diagram of Fig. 1 which illustrates a manufacturing process of the television tuner.

An operation of mounting all of the functional components, i.e., the channel selection circuit 23, the demodulator circuit 24, the nonvolatile memory 25, and the CPU 26, on the circuit board 27, and an operation of accommodating the circuit board 27 mounted with the functional components in the housing 22 are first performed (Step S101).

Then, common programs independent of a television tuner model, i.e., an OS and tuner control software including hardware driver software, application interface software, channel control software, and the like, are downloaded to the nonvolatile memory 25 by using a debugger or the like (Step S102).

Subsequent to the process of Step S102, a test is performed on the television tuner in which the common programs independent of the television tuner model have been downloaded to the nonvolatile memory 25 thereof. The test is performed on the television tuner in which the nonvolatile memory 25 stores only the common programs. Therefore, there is no need to sort out and manage the television tuners in accordance to the model. Accordingly, the test can be performed easily and securely (Step S103) .

Then, programs dependent on the television tuner model (i.e., different among clients), i.e., television control software including display menu control software, remote control design software, and the like, are downloaded to the nonvolatile memory 25 by using the debugger or the like. Subsequent to the downloading of the programs dependent on the television tuner model, the television tuners are sorted out, managed, and shipped in accordance with the television tuner model (Steps S104 and S105).

In the above-described manufacturing process illustrated in Fig. 1, at Step S104 of downloading the programs dependent on the television tuner model, the programs to be downloaded can be automatically selected and downloaded by distinguishing the models through reading of barcodes which have been attached to shipping labels of the television tuners after the preceding testing process of Step S103.

Further, in the method of manufacturing a television tuner according to the above-described embodiment of the present invention, the programs downloaded to the nonvolatile memory 25 are previously divided into the common programs independent of the television tuner model, i.e., the tuner control software including the hardware driver software, the application interface software, and the channel control software, and the programs dependent on the television tuner model, i.e., the television control software including the display menu control software and the remote control design software.

Each of the programs dependent on the television tuner model can be subjected to a test during a time after the downloading of the programs dependent on the television tuner model and before shipment of the television tuners.

According to the method of manufacturing a television tuner of the above-described embodiment of the present invention, most parts of the testing process, i.e., conventionally the most complicated process can be standardized to be independent of the model. Thus, the processes performed immediately before the shipment can be standardized. Accordingly, a shipping error occurring in the development of the models can be easily prevented.

## Claims

1. A method of manufacturing a television tuner including a channel selection circuit, a demodulator circuit, a nonvolatile memory, and a central processing unit, the method comprising the sequential steps of:
performing mounting (101) of components including the channel selection circuit, the demodulator circuit, the nonvolatile memory, and the central processing unit;
downloading (102) tuner control software and an operating system, which form common programs executable by the central processing unit and independent of a television tuner model, to the nonvolatile memory;
performing (103) a test on the television tuner when the non-volatile memory stores only the common programs; and
downloading (104) television control software, which forms programs executable by the central processing unit and dependent on the television tuner model, to the nonvolatile memory.

2. The method of manufacturing a television tuner according to Claim 1,
wherein the tuner control software includes hardware driver software, application interface software, and channel control software, and
wherein the television control software includes display menu control software and remote control design software.

3. A television tuner comprising:
a channel selection circuit (23);
a demodulator circuit (24);
a nonvolatile memory (25); and
a central processing unit (26),
on the television tuner being obtainable by the following steps that wherein mounting of components including the channel selection circuit, the demodulator circuit, the nonvolatile memory, and the central processing unit is performed; tuner control software and an operating system, which form common programs executable by the central processing unit and independent of a television tuner model, are downloaded to the nonvolatile memory; a test is performed on the television tuner when the non-volatile memory stores only the common programs; and television control software, which forms programs executable by the central processing unit and dependent on the television tuner model, is downloaded to the nonvolatile memory.

4. The television tuner according to Claim 3,
wherein the components including the channel selection circuit, the demodulator circuit, the nonvolatile memory, and the central processing unit are mounted on a circuit board (27) and accommodated in a housing (22).

## Patentansprüche

1. Verfahren zum Herstellen eines Fernsehtuners mit einer Kanalwählschaltung, einer Demodulatorschaltung, einem nichtflüchtigen Speicher und einer zentralen Verarbeitungseinheit, wobei das Verfahren die folgenden Ablaufschritte umfasst:
Einbauen (101) von Komponenten, zu denen die Kanalwählschaltung, die Demodulatorschaltung, der nichtflüchtige Speicher und die zentrale Verarbeitungseinheit gehören,
Herunterladen (102) von Tuner-Steuersoftware und einem Betriebssystem, die allgemeine Programme darstellen, welche von der zentralen Verarbeitungseinheit ausgeführt werden und vom Fernsehtuner-Modell unabhängig sind, in den nichtflüchtigen Speicher,
Durchführen (103) eines Tests an dem Fernsehtuner, wenn im nichtflüchtigen Speicher nur die allgemeinen Programme gespeichert sind, und
Herunterladen (104) von Fernsehbediensoftware, die Programme darstellt, welche von der zentralen Verarbeitungseinheit ausgeführt werden und vom Fernsehtuner-Modell abhängig sind, in den nichtflüchtigen Speicher.

2. Verfahren zum Herstellen eines Fernsehtuners nach Anspruch 1,
bei dem zur Tuner-Steuersoftware Hardware-Treibersoftware, Anwendungsschnittstellen-Software und Kanal-Steuersoftware gehört und
bei dem zur Fernsehbediensoftware Bildschirmmenü-Steuersoftware und Fernbedienungssoftware gehört.

3. Fernsehtuner, der Folgendes umfasst:
eine Kanalwählschaltung (23),
eine Demodulatorschaltung (24),
einen nichtflüchtigen Speicher (25) und
eine zentrale Verarbeitungseinheit (26);
wobei man den Fernsehtuner mit Hilfe der folgenden Schritte erhält:
Einbauen von Komponenten, zu denen die Kanalwählschaltung, die Demodulatorschaltung, der nichtflüchtige Speicher und die zentrale Verarbeitungseinheit gehören,
Herunterladen von Tuner-Steuersoftware und einem Betriebssystem, die allgemeine Programme darstellen, welche von der zentralen Verarbeitungseinheit ausgeführt werden und vom Fernsehtuner-Modell unabhängig sind, in den nichtflüchtigen Speicher,
Durchführen eines Tests an dem Fernsehtuner, wenn im nichtflüchtigen Speicher nur die allgemeinen Programme gespeichert sind, und
Herunterladen von Fernsehbediensoftware, die Programme darstellt, welche von der zentralen Verarbeitungseinheit ausgeführt werden und vom Fernsehtuner-Modell abhängig sind, in den nichtflüchtigen Speicher.

4. Fernsehtuner nach Anspruch 3, bei dem die Komponenten, zu denen die Kanalwählschaltung, die Demodulatorschaltung, der nichtflüchtige Speicher und die zentrale Verarbeitungseinheit gehören, auf einer Leiterplatte (27) angebracht und in einem Gehäuse (22) untergebracht werden.

## Revendications

1. Procédé de fabrication d'un syntoniseur de téléviseur comportant un circuit de sélection de canal, un circuit démodulateur, une mémoire rémanente et une unité centrale de traitement, le procédé comprenant les étapes séquentielles consistant à :
effectuer un montage (101) de composants comportant le circuit de sélection de canal, le circuit démodulateur, la mémoire rémanente et l'unité centrale de traitement ;
télécharger (102) un logiciel de commande de syntoniseur et un système d'exploitation, lesquels forment des programmes communs exécutables par l'unité centrale de traitement et indépendants d'un modèle de syntoniseur de téléviseur, dans la mémoire rémanente ;
exécuter (103) un test sur le syntoniseur de téléviseur quand la mémoire rémanente mémorise uniquement les programmes communs ; et
télécharger (104) un logiciel de commande de téléviseur, lequel forme des programmes exécutables par l'unité centrale de traitement et dépendants du modèle de syntoniseur de téléviseur, dans la mémoire rémanente.

2. Procédé de fabrication d'un syntoniseur de téléviseur selon la revendication 1,
dans lequel le logiciel de commande de syntoniseur comporte un logiciel d'attaque de matériel, un logiciel d'interface d'application et un logiciel de commande de canal, et
dans lequel le logiciel de commande de téléviseur comporte un logiciel de commande de menu d'affichage et un logiciel de conception de commande à distance.

3. Syntoniseur de téléviseur comprenant:
un circuit de sélection de canal (23) ;
un circuit démodulateur (24) ;
une mémoire rémanente (25) ; et
une unité centrale de traitement (26) ;
le syntoniseur de téléviseur étant réalisable par les étapes suivantes dans lesquelles un montage de composants comportant le circuit de sélection de canal, le circuit démodulateur, la mémoire rémanente et l'unité centrale de traitement est exécuté ; un logiciel de commande de syntoniseur et un système d'exploitation, lesquels forment des programmes communs exécutables par l'unité centrale de traitement et indépendants d'un modèle de syntoniseur de téléviseur, sont téléchargés dans la mémoire rémanente ; un test est exécuté sur le syntoniseur de téléviseur quand la mémoire rémanente mémorise uniquement les programmes communs ; et un logiciel de commande de téléviseur, lequel forme des programmes exécutables par l'unité centrale de traitement et dépendants du modèle de syntoniseur de téléviseur, est téléchargé dans la mémoire rémanente.

4. Syntoniseur de téléviseur selon la revendication 3,
dans lequel les composants comportant le circuit de sélection de canal, le circuit démodulateur, la mémoire rémanente et l'unité centrale de traitement sont montés sur une carte de circuit (27) et logés dans un boîtier (22).
